# FASCICULE DE BREVET EUROPEEN

(11) **EP 2 234 066 B1**
(45) Date de publication et mention de la délivrance du brevet: **16.11.2016**
(21) Numéro de dépôt: 10156992.9
(22) Date de dépôt: 19.03.2010
(51) Int. Cl.: G06T 7/00

(54) **Mesure de distance à partir d'images stéréo**
Entfernungsmessung aus Stereobildern
Distance measurement from stereo images

(30) Priorité: 24.03.2009 FR 0951891
(43) Date de publication de la demande: 29.09.2010
(73) Titulaire: Orange, 75015 Paris (FR)
(72) Inventeur: Gachignard, Olivier, 92120 MONTROUGE (FR)

(56) Documents cités:
- JP-B- 6 015 972
- US-A- 6 148 120
- GVILI R ET AL: "Depth Keying" APPLICATIONS OF DIGITAL IMAGE PROCESSING XXI : 21 - 24 JULY 1998, SAN DIEGO, CALIFORNIA, SPIE, BELLINGHAM, VA; US, vol. 5006, 1 janvier 2003 (2003-01-01), pages 564-574, XP003006231

## Description

### Domaine de l'invention

Le domaine de l'invention se rapporte au traitement de données, en particulier d'une image représentative d'une zone d'observation dans laquelle est situé un objet disposé par rapport à un plan de référence, dans le but de déduire la distance réelle qui sépare l'objet dudit plan de référence.

Plus précisément, au cours d'un tel traitement, l'image de l'objet par rapport au plan de référence est capturée par des premier et second dispositifs de capture d'image, tels que des caméras vidéo, en temps réel. L'image capturée est ensuite transmise à un dispositif de traitement d'image, puis affichée sur un écran de ce dernier afin d'être traitée.

L'invention trouve une application privilégiée mais non limitative dans la télémétrie, la visioconférence ou la visiophonie.

### Arrière-plan de l'invention

Dans le domaine de la visioconférence ou de la visiophonie, des utilisateurs ne souhaitent généralement pas montrer d'image de leur environnement intime en utilisant un dispositif de capture d'image tel qu'une caméra ou une webcaméra ("webcam" en anglais). Cette réticence des utilisateurs peut constituer un frein psychologique à l'utilisation de la visiophonie à domicile.

Le brevet JP 06 015972 B enseigne de déterminer la distance d'un objet à l'aide de deux systèmes optiques et d'un laser.

Par ailleurs, dans le domaine des radiocommunications, le document EP 1 847 958 divulgue un terminal mobile équipé de deux caméras miniatures qui permet à l'utilisateur de ce dernier de transmettre à un autre utilisateur, possédant un terminal mobile, un message visiophonique incluant une image composée essentiellement d'une partie utile correspondant par exemple à la silhouette ou au visage de l'utilisateur. Le débit d'information nécessaire à la transmission du message à travers le réseau est ainsi réduit car seule la partie d'image utile est transmise, le reste de l'image correspondant par exemple au décor dans lequel se trouve l'utilisateur étant supprimé par un traitement adéquat.

Un inconvénient du terminal mobile précité réside dans le fait que l'image restituée sur le terminal mobile du correspondant présente une faible résolution, l'écran d'un terminal mobile présentant une taille réduite.

Dans l'état de la technique, il existe également des systèmes à base de capteur infrarouge qui utilisent des projections d'ondes électromagnétiques en infrarouge dans une scène particulière et analysent les ondes projetées afin de faire une distinction entre des personnes et des objets.

Cependant, ces systèmes requièrent une installation complexe et coûteuse qui se révèle inadaptée à des applications telles que la visioconférence. En outre de tels systèmes présentent l'inconvénient de générer un temps de latence relativement important de la prise de vue qui est provoqué par la réinitialisation du capteur infrarouge après chaque capture d'image. Enfin, la définition de l'image obtenue par de tels systèmes est relativement médiocre.

### Objet et résumé de l'invention

Un des buts de l'invention est de remédier à des inconvénients de l'état de la technique précité.

A cet effet, selon un premier aspect, la présente invention concerne un procédé tel que défini dans la revendication 1.

Grâce au simple couplage d'un dispositif de capture d'image standard à faisceau conique et d'un dispositif de capture d'image à faisceau parallèle bien moins complexe et coûteux qu'un dispositif de capture d'image avec capteur Infrarouge, l'image de la zone d'observation affichée permet quasiment en temps réel de discriminer au pixel près l'objet par rapport au plan de référence, puis d'en déduire très précisément la distance qui sépare réellement l'objet dudit plan de référence.

Le traitement de l'image est par ailleurs effectué plus rapidement qu'avec les systèmes à base de capteur d'image Infrarouge de l'art antérieur, avec une définition de l'image répondant aux critères de la Haute Définition.

Dans un mode de réalisation, l'étape de corrélation précitée est suivie d'une étape de calcul de la distance de l'objet par rapport aux premier et second dispositifs de capture d'image.

Une telle disposition permet une application directe du procédé de traitement aux techniques de télémétrie, telles qu'utilisées par exemple dans le domaine de l'architecture, de la médecine, etc....ou à la segmentation d'objet dans le cadre par exemple d'une visioconférence.

Dans un autre mode de réalisation, dans le cas où un son est émis par l'objet ou au voisinage de ce dernier, le procédé comprend les étapes suivantes:
- calcul de la distance réelle qui sépare l'objet du plan de référence, à partir de l'intensité du son mesuré,
- comparaison de la distance réelle calculée avec la distance réelle obtenue au cours de l'étape de corrélation.

Une telle disposition permet d'affiner la mesure de la distance réelle et en particulier de lever le doute sur la disposition de l'objet en avant ou en arrière du plan de référence.

Dans un autre mode de réalisation, lorsqu'au moins un autre objet est situé dans la zone d'observation, l'étape de corrélation est suivie d'une étape de comparaison des distances réelles qui séparent chaque objet du plan de référence.

Une telle disposition permet ainsi de discriminer très précisément chaque objet par rapport au plan de référence, avant tout autre traitement de l'image, telle qu'une segmentation par exemple. Cela permet en particulier de lever tout doute qui subsisterait sur la disposition de tel ou tel objet en avant ou en arrière du plan de référence.

Dans encore un autre mode de réalisation, le procédé de traitement selon l'invention comprend une étape de segmentation de l'image reçue.

Dans le cas où la zone d'observation comprend en particulier plusieurs objets, par exemple une personne, un arbre et un panneau disposés respectivement devant et derrière la personne, la segmentation d'image selon l'invention permet d'obtenir une image segmentée qui représente par exemple uniquement la personne, bien que cette dernière soit située entre deux objets dans la zone d'observation. Une telle segmentation est rendue possible par trois mesures précises successives de distance conformes à l'invention, la première fournissant la valeur de la distance entre l'arbre et le plan de référence, la seconde fournissant la valeur de la distance entre la personne et le plan de référence, et la troisième fournissant la valeur de la distance entre le panneau et le plan de référence.

Une telle segmentation présente l'avantage de ne pas nécessiter un décor particulier dans la zone d'observation, tel qu'un fond monochrome classiquement bleu, et peut donc être exécutée sans contraintes dans un lieu quelconque.

Dans le cas d'une application de visiophonie, où l'objet situé dans la zone d'observation est l'utilisateur lui-même, l'image segmentée ainsi modifiée peut représenter l'utilisateur dans un décor sélectionné par ce dernier.

Corrélativement, selon un second aspect, la présente invention concerne un dispositif de traitement de données tel que défini dans la revendication 6.

Dans un mode de réalisation, le dispositif de traitement comprend des moyens pour calculer la distance de l'objet par rapport aux premier et second dispositifs de capture d'image.

Dans un autre mode de réalisation, le dispositif de traitement comprend en outre:
- des moyens pour calculer, dans le cas où un son est émis par l'objet ou au voisinage de ce dernier, la distance réelle qui sépare l'objet du plan de référence, à partir de l'intensité du son mesuré,
- des moyens pour comparer la distance calculée avec la distance obtenue par les moyens de corrélation.

Dans un autre mode de réalisation, le dispositif de traitement comprend des moyens de comparaison pour comparer la distance réelle qui sépare l'objet du plan de référence avec la distance réelle qui sépare un autre objet du plan de référence, dans la zone d'observation.

Dans encore un autre mode de réalisation, le dispositif de traitement comprend des moyens de segmentation de l'image reçue.

Selon un troisième aspect, la présente invention concerne un système de mesure tel que défini dans la revendication 11.

Dans un mode de réalisation, le système comprend en outre un dispositif de mesure acoustique qui est destiné à mesurer l'intensité d'un son émis par l'objet ou au voisinage de ce dernier, le dispositif de traitement de données comprenant en outre:
- des moyens pour recevoir la valeur de l'Intensité mesurée en provenance du dispositif de mesure acoustique,
- des moyens pour calculer la distance réelle qui sépare l'objet du plan de référence, à partir de l'intensité du son mesuré,
- des moyens pour comparer la distance calculée avec la distance obtenue par les moyens de corrélation.

L'invention vise également un programme d'ordinateur tel que défini dans la revendication 13.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'informations tel que défini dans la revendication 14.

D'autre part, un tel support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'informations peut être un circuit intégré dans lequel le programme est incorporé, le circuit étant adapté pour exécuter ou pour être utilisé dans l'exécution du procédé en question.

Le dispositif de traitement de données, le système et le programme d'ordinateur précités présentent au moins les mêmes avantages que ceux conférés par le procédé selon la présente invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures:
- la **figure 1** est une représentation schématique de l'architecture générale dans laquelle est mis en oeuvre le procédé de mesure de distance conforme à l'invention;
- la **figure 2** représente l'image de la zone d'observation capturée dans le cas où un seul objet est situé dans la zone d'observation ;
- la **figure 3** représente un ordinogramme du procédé de mesure de distance conforme à l'invention;
- la **figure 4** est une vue partielle de la zone d'observation représentée à la figure 1, dans laquelle sont situés deux objets;
- la **figure 5** représente un ordinogramme du procédé de mesure de distance conforme au mode de réalisation représenté à la figure 4;
- la **figure 6** représente l'image de la zone d'observation capturée dans le cas du mode de réalisation représenté à la figure 4;
- la **figure 7** représente une image obtenue après segmentation de l'image représentée à la figure 6.

### Description détaillée d'un premier mode de réalisation

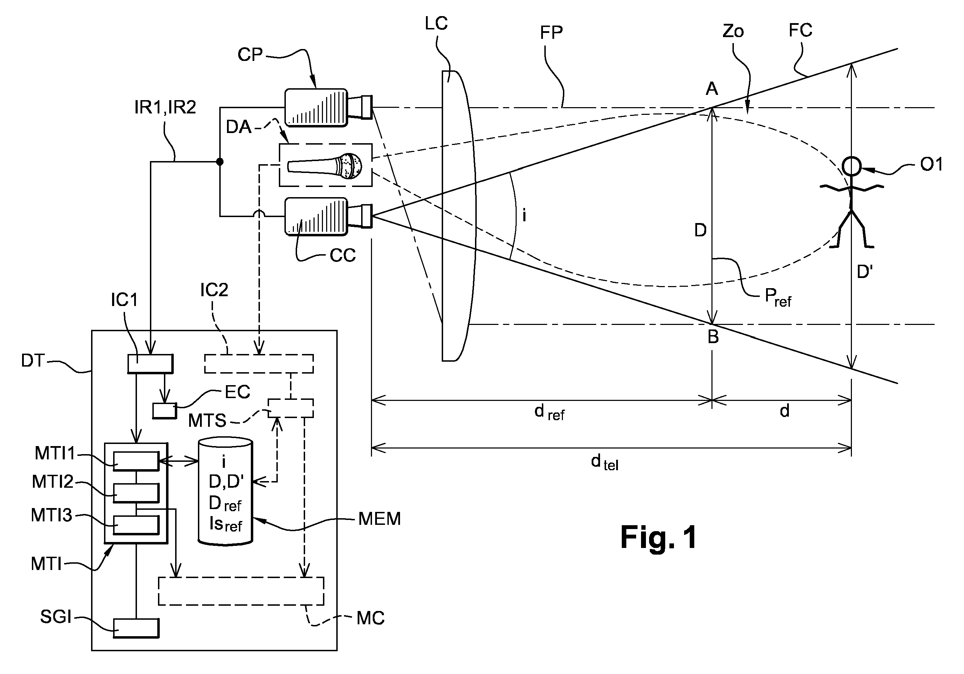

La **figure 1** représente de façon générale, selon un mode de réalisation, l'architecture générale du système dans lequel est mis en oeuvre le procédé de mesure de distance selon l'invention.

Selon l'invention et conformément à l'exemple représenté sur la **figure 1****,** le système de mesure de distance comprend principalement :
- un premier dispositif de capture d'image visible CC,
- un second dispositif de capture d'image visible CP,
- et un dispositif informatique DT de traitement de données.

Le premier dispositif de capture d'image CC et le second dispositif de capture d'image CP sont disposés face à objet 01 situé dans une zone d'observation ZO, ledit objet 01 étant, dans l'exemple représenté, un individu.

Les premier et second dispositifs de capture d'image CC et CP sont réglés de manière à avoir une vision de la même zone d'observation ZO et à capturer des images relatives aux mêmes objets de la zone d'observation ZO. Les dispositifs de capture CC et CP sont par exemple disposés côte-à-côte ou l'un au dessus de l'autre.

Le premier dispositif de capture d'image CC, dit également dispositif de prise d'image, est par exemple un appareil photographique numérique, une caméra vidéo numérique ou analogique, un caméscope ou une webcaméra. Un tel premier dispositif de capture d'image est conçu pour capturer un faisceau conique FC en direction de l'individu 01.

Une image visible capturée par le premier dispositif de capture d'image CC est composée soit d'une image capturée par un appareil photographique numérique par exemple, soit de plusieurs images formant une séquence vidéo capturée par une caméra ou un caméscope par exemple. Le premier dispositif de capture d'image CC transmet une image réelle numérique IR1 représentative de la zone d'observation ZO au dispositif de traitement DT.

Avantageusement selon l'invention, le second dispositif de capture d'image CP, dit également dispositif de prise d'image, est de type télécentrique, c'est-à-dire qu'il capture un faisceau parallèle FP en direction de l'individu 01. Un tel second dispositif de capture d'image se distingue uniquement du premier dispositif de capture d'image par le fait qu'il est disposé, en fonction du contexte d'utilisation, au foyer d'une lentille convergente ou d'un miroir concave (parabolique ou sphérique). Dans l'exemple représenté, il s'agit d'une lentille convergente LC.

Selon l'invention, les premier et second dispositifs de capture d'image CC et CP sont en outre réglés de façon à ce que les deux faisceaux conique et parallèle capturés respectivement par ces derniers se croisent en deux points fixes A et B, de façon à déterminer un plan fixe qui constitue un plan référence P_{ref} par rapport auquel est disposé l'objet 01. Le plan de référence P_{ref} est ainsi situé à une distance constante d_{ref} des premier et second dispositifs de capture d'image CC et CP, l'objet 01 étant quant à lui situé à un distance variable d du plan de référence P_{ref}, puisque l'individu qui représente ici l'objet 01 est susceptible de se déplacer dans la zone d'observation ZO.

Comme dans le cas du premier dispositif de capture d'image CC, une image visible IR2 capturée par le second dispositif de capture d'image CP est composée soit d'une image capturée par un appareil photographique numérique par exemple, soit de plusieurs images formant une séquence vidéo capturée par une caméra ou un caméscope par exemple.

Compte tenu de ses propriétés de télécentrisme, le second dispositif de capture d'image CP transmet au dispositif de traitement DT l'image réelle IR2 représentative de la zone d'observation ZO dans laquelle est situé l'objet 01 par rapport au plan de référence P_{ref}.

L'objet 01 dans le plan de référence P_{ref} tel que capturé par le second dispositif de capture d'image CP apparaît ainsi de façon toujours nette et sans modification de sa taille initiale, quel que soit la distance qui le sépare du second dispositif de capture d'image CP.

Le dispositif de traitement de données DT est un dispositif informatique qui comprend :
- une première interface de communication IC1 qui est adaptée pour communiquer avec les premier et second dispositifs de capture d'image CC et CP, afin de recevoir les images IR1 et IR2 capturées respectivement par ces derniers,
- une interface d'utilisateur comportant un écran de visualisation EC, un clavier (non représenté) et un dispositif de pointage (non représenté), tel que par exemple une souris,
- un module de traitement d'image MTI.

De façon particulièrement avantageuse, l'écran de visualisation EC présente une haute définition de résolution.

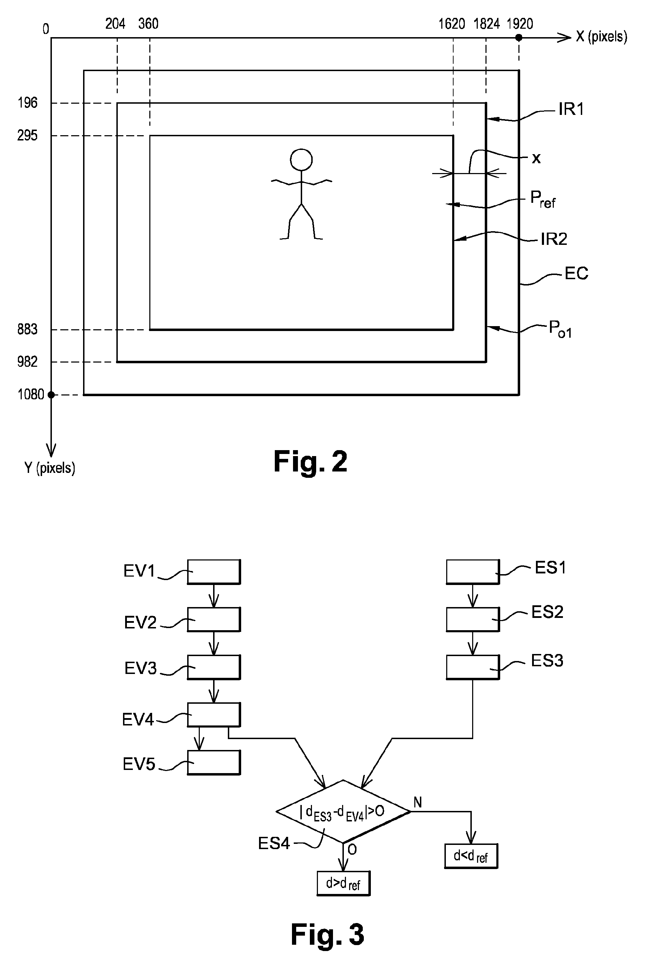

Comme on peut le voir sur la **figure 2****,** un tel écran EC haute définition présente par exemple une résolution de 1920x1080 pixels.

L'écran EC permet d'afficher lesdites images IR1 et IR2 transmises, respectivement dans un premier plan qui correspond à un plan objet P_{O1} comprenant ledit objet O1, à savoir l'individu dans l'exemple représenté, et dans un second plan correspondant au plan de référence P_{ref}.

L'écart pixellique, dans la direction X ou dans la direction Y, entre deux bords contigus, respectivement des images IR1 et IR2, correspond avantageusement à la profondeur d qui sépare l'objet O1 du plan de référence P_{ref} dans la zone d'observation ZO, telle que représentée sur la **figure 1****.**

De ce fait, il est possible de déterminer au pixel près le décalage existant entre les deux images affichées IR1 et IR2 pour en déduire ensuite la profondeur réelle d.

Dans l'exemple d'écran représenté sur la **figure 2****,** il est considéré qu'un décalage de 1 pixel entre les deux images IR1 et IR2 correspond à une profondeur réelle d égale à 1mm.

En référence à nouveau à la **figure 1****,** le module de traitement d'image MTI est un module logiciel qui est stocké dans une mémoire morte (non représentée) du dispositif de traitement DT.

Le module de traitement d'image MTI comprend en particulier:
- un premier sous-module de calcul MTI1 pour déterminer dans l'image affichée l'écart pixellique en X ou en Y entre deux côtés contigus, respectivement de l'image IR1 et de l'image IR2,
- un second sous-module de calcul MTI2 pour corréler le nombre de pixels déterminé à la valeur de la mesure de la distance réelle d qui sépare l'objet 01 dudit plan de référence P_{ref}.

Dans le cas d'une application de télémétrie, le module de traitement d'image MTI comprend en outre un troisième sous-module de calcul MTI3 pour calculer la distance de l'objet 01 par rapport aux premier et second dispositifs de capture d'image CC et CP.

Par exemple, le dispositif de traitement de données DT est un ordinateur personnel ou un terminal mobile, tel que par exemple un ordinateur portable.

Selon d'autres exemples, le dispositif de traitement de données DT comprend tout terminal domestique communicant portable ou non tel qu'une console de jeux vidéo, ou un récepteur de télévision intelligent coopérant avec une télécommande à afficheur, un décodeur du type Set-Top-Box, ou un clavier alphanumérique servant également de souris à travers une liaison infrarouge.

Par exemple, les premier et second dispositifs de capture d'image CC et CP sont reliés par l'intermédiaire de câbles USB au dispositif de traitement de données DT qui est un ordinateur personnel.

En référence maintenant à la **figure 3****,** on va décrire le procédé de traitement de données conforme au premier mode de réalisation.

Au cours d'une étape EV1 représentée à la **figure 3****,** les premier et second dispositifs de capture d'image CC et CP sont calibrés et synchronisés : les focales des deux dispositifs sont réglées, mécaniquement et/ou électriquement, et des bases de temps dans les dispositifs sont mutuellement synchrones afin de capturer et restituer aux mêmes instants des images relatives aux mêmes objets de la zone d'observation ZO, et des repères pour la visualisation des images numériques capturées coïncident.

L'opération de calibrage permet en particulier de fixer préalablement certaines valeurs représentées à la **figure 1****,** telles que :
- l'angle i du faisceau conique FC capturé par le premier dispositif de capture d'image CC,
- la distance D entre les deux points d'intersection A et B des faisceaux conique FC et parallèle FP,
- la distance d_{ref} qui sépare le plan de référence P_{ref} des premier et second dispositifs de capture d'image CC et CP.

Ces constantes sont alors stockées dans une mémoire MEM du dispositif de traitement DT.

Au cours d'une étape EV2 représentée sur la **figure 3****,** les images capturées par les dispositifs de capture d'image CC et CP, c'est-à-dire les images réelles IR1 et IR2, sont transmises au dispositif de traitement de données DT.

Au cours de cette même étape, en référence à la **figure 1****,** la première interface de communication IC1 transmet les images capturées IR1 et IR2 sur l'écran de visualisation EC, qui les restitue, puis les affiche, ainsi qu'au module de traitement d'image MTI.

Par exemple, comme montré schématiquement à la **figure 2****,** dans deux fenêtres juxtaposées de l'écran EC sont affichées respectivement l'image réelle IR1, capturée par le dispositif CC de capture d'image à faisceau conique, et l'image IR2 du plan de référence P_{ref} capturée par le dispositif CP de capture d'image à faisceaux parallèles.

L'image IR2 qui contient le plan de référence P_{réf} est affichée sur l'écran EC selon une taille prédéfinie, à savoir 1260x588 pixels, grâce à la relation trigonométrique suivante : tan(i/2)=d_{ref}/2D.

L'image IR1 qui contient le plan objet P_{O1} est affichée sur l'écran EC également selon une taille également prédéfinie, à savoir 1620x786 pixels, grâce à la relation trigonométrique suivante : tan(i/2)=d_{ref}/2D', où D' représente la distance d'ouverture du faisceau conique FC dans le plan objet P_{O1}.

Au cours d'une étape EV3 représentée sur la **figure 3****,** le sous-module de calcul MTI1 du module de traitement d'image MTI détermine sur l'écran EC l'écart pixellique dans la direction X par exemple, entre deux côtés contigus, respectivement de l'image IR1 et de l'image IR2. Dans l'exemple représenté **figure 2****,** le sous-module MTI1 détermine un écart négatif de 204 pixels dans la direction X. Ceci signifie que l'objet 01 est en réalité en arrière du plan de référence P_{ref}, et donc plus loin des premier et second dispositifs de capture d'image CC et CP, que ce dernier.

Dans le cas où l'objet 01 aurait été disposé devant le plan de référence P_{ref}, c'est-à-dire plus près des dispositifs de capture d'image CC et CP, le sous-module MTI1 aurait alors déterminé un écart positif de pixels dans la direction X.

Au cours d'une étape EV4 représentée à la **figure 3****,** le second sous-module de calcul MTI2 du module de traitement d'image MTI corrèle le nombre de pixels déterminé, 204, à la valeur de la mesure de la distance réelle d qui sépare l'objet 01 dudit plan de référence P_{ref}.

Puisque 1 pixel entre les deux images IR1 et IR2 correspond à une profondeur réelle d égale à 1mm, comme cela a été mentionné plus haut dans la description, le module MTI2 détermine précisément que la distance réelle d est égale à 204mm.

Dans le cas d'une application de télémétrie, au cours d'une étape EV5 représentée à la **figure 3****,** le troisième sous-module de calcul MTI3 du module de traitement d'image MTI détermine la distance réelle, notée dₜₑₗ sur la **figure 1**, qui sépare l'objet 01 des dispositifs de capture d'image CC et CP.

A cet effet, le sous-module MTI3 calcule dₜₑₗ=d_{ref}+d. Si par exemple d_{ref} est égale à 50cm, dₜₑₗ=50 +20,4=70,4cm.

### Description d'un second mode de réalisation

Le second mode de réalisation, tel que représenté en pointillé sur la **figure 1****,** se distingue du premier mode, par l'ajout d'un dispositif de mesure acoustique DA qui est disposé à proximité des dispositifs de capture d'image CC et CP.

Dans l'exemple représenté, le dispositif de mesure acoustique DA est disposé dans le plan des objectifs des deux dispositifs de capture d'image CC et CP.

Le dispositif de mesure acoustique DA est destiné à mesurer l'intensité Is du son qui est capturé directement par l'objet 01 ou par un autre objet disposé à proximité de l'objet 01.

Dans l'exemple représenté, l'objet 01 étant un individu, c'est l'intensité sonore de la parole de l'individu 01 qui va être mesurée.

Dans l'exemple représenté, le dispositif de mesure acoustique DA est un sonomètre couplé à un microphone.

Le dispositif de mesure acoustique DA est en outre adapté pour transmettre l'intensité Is mesurée au dispositif de traitement de données DT, en vue de déterminer par ce dernier la distance réelle d qui sépare l'objet 01 du plan de référence P_{ref}.

A cet effet, le dispositif de traitement de données DT comprend en outre :
- une seconde interface de communication IC2 qui est adaptée pour communiquer avec le dispositif de mesure acoustique DA, afin de recevoir en temps réel la valeur de l'intensité sonore Is mesurée par ce dernier,
- un module de traitement de son MTS.

Le module de traitement de son MTS est un module logiciel qui est stocké dans une mémoire morte (non représentée) du dispositif de traitement DT. Le module MTS est adapté pour calculer la distance réelle d qui sépare l'objet 01 du plan de référence à partir de l'équation physique d'une onde sonore dans l'air Is (dB)=10log(d²).

Enfin, le dispositif de traitement de données DT comprend un module de comparaison MC qui est également un module logiciel stocké dans la mémoire morte du dispositif de traitement DT. Le module MC est destiné à comparer la distance réelle calculée par le module de traitement de son MTS avec la distance réelle obtenue par le module de corrélation MTI2 du module MTI de traitement d'image précité, pour en déduire une mesure affinée de la distance réelle d.

En référence à nouveau à la **figure 3****,** on va décrire le procédé de traitement de données conforme au second mode de réalisation.

Au cours d'une étape ES1 représentée à la **figure 3****,** le dispositif de mesure acoustique DA est étalonné : à cet effet, ce dernier est disposé dans le plan de référence P_{ref} de façon à mesurer l'intensité sonore de référence Is_{ref} du son émis par l'objet 01.

Au cours de cette même étape, l'intensité sonore de référence Is_{ref} est transmise au dispositif de traitement DT, puis est stockée dans la mémoire MEM de ce dernier.

Au cours d'une étape ES2 représentée sur la **figure 3****,** le dispositif de mesure acoustique DA est disposé dans le plan des objectifs des dispositifs de capture d'image CC et CP, comme représenté à la **figure 1****,** puis mesure l'intensité Is du son émis par l'individu O1.

Au cours de cette même étape, en référence à la **figure 1****,** la seconde interface de communication IC2 transmet l'intensité sonore Is au module de traitement de son MTS.

Au cours d'une étape ES3 représentée sur la **figure 3****,** le module de calcul MTS calcule la distance réelle d qui sépare l'individu 01 du plan de référence en fonction de l'intensité sonore Is mesurée, conformément à l'équation d=d_{ref}√(Is/Is_{ref}).

La distance d est supérieure à d_{ref}, ce qui signifie que l'individu 01 est bien en arrière du plan de référence P_{ref}.

Si la distance d avait été inférieure à d_{ref}, il aurait été déduit que l'individu 01 était situé en avant du plan de référence P_{ref}, c'est-à-dire entre les deux dispositifs de capture d'image CC et CP et le plan de référence P_{ref}.

Au cours de cette même étape, le module de traitement de son MTS transmet la distance réelle d qui vient d'être calculée au module de comparaison MC représenté à la **figure 1****.**

Au cours d'une étape ES4 représentée à la **figure 3****,** le module de comparaison MC confronte la distance réelle qui vient d'être calculée par le module de traitement de son MTS à la distance réelle qui a été évaluée précédemment par le sous-module de calcul MTI2 au cours de l'étape EV4. Une telle comparaison consiste par exemple à calculer la valeur absolue des distances réelles précitées.

Une telle étape de comparaison permet d'obtenir une mesure précise de la valeur de la distance réelle d, qui peut ensuite être utilisée pour le calcul de la distance dₜₑₗ effectuée à l'étape EV5 du premier mode de réalisation précité.

### Description d'un troisième mode de réalisation

Conformément au troisième mode de réalisation, le dispositif de traitement DT comprend en outre un module de segmentation d'image SGI représenté sur la **figure 1****.** Un tel module est classique en tant que tel et, pour cette raison, ne sera pas décrit en détail.

Le module de segmentation d'image SGI s'avère particulièrement utile dans le cas où plusieurs objets sont disposés dans la zone d'observation ZO.

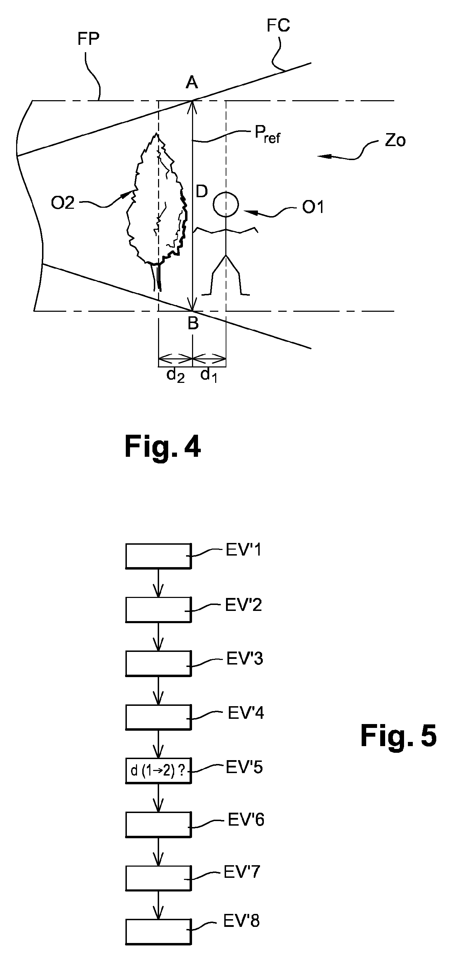

La **figure 4****,** qui est une vue partielle agrandie de la zone ZO de la **figure 1****,** représente un exemple où deux objets 01 et 02 sont disposés très proches l'un de l'autre dans la zone d'observation ZO.

Dans l'exemple représenté, l'objet 01 est un individu et l'objet 02 est un arbre, l'individu 01 étant caché partiellement par l'arbre 02. L'individu 01 est disposé à une distance d1 du plan de référence P_{ref}, légèrement en arrière de ce dernier. L'arbre 02 est disposé à une distance d2 du plan de référence P_{ref}, légèrement en avant de ce dernier.

En référence maintenant à la **figure 5****,** on va décrire le procédé de traitement de données conforme au troisième mode de réalisation.

Des étapes EV'1 à EV'4, identiques respectivement aux étapes EV1 à EV4 décrites ci-dessus en relation avec le premier mode de réalisation, sont effectuées de façon à déterminer d'une part la distance réelle d1, et, d'autre part la distance réelle d2.

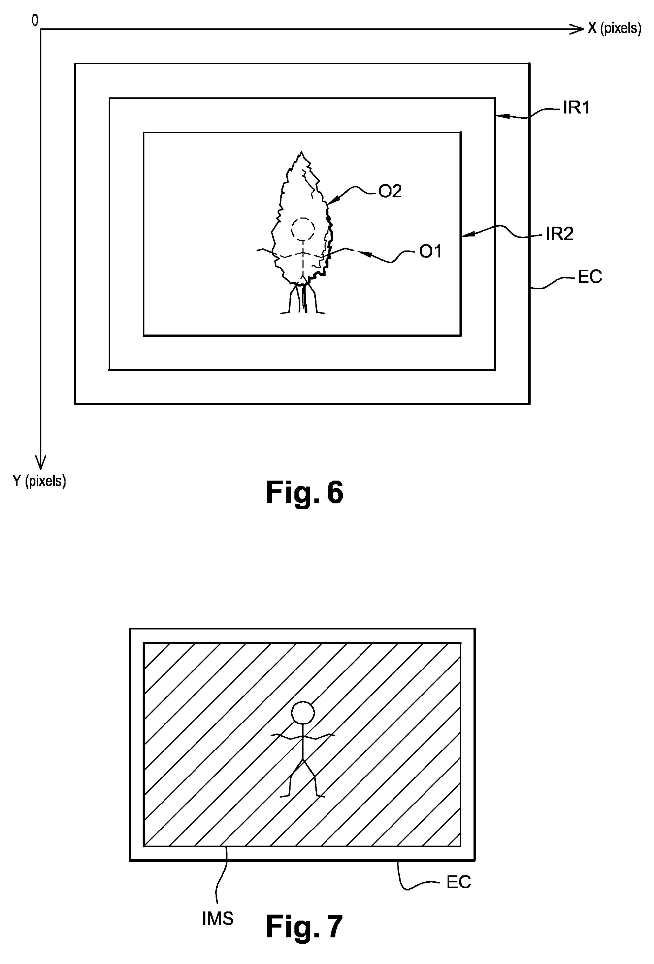

En particulier au cours de l'étape EV'2, l'image représentant l'individu 01 et l'arbre 02 est affichée sur l'écran EC du dispositif de traitement DT, comme représenté à la **figure 6****.** Seuls les membres de l'individu 01 sont visibles sur cette figure.

Dans le cas où les objets 01 et 02 sont très proches du plan de référence P_{ref}, comme c'est le cas sur la **figure 4****,** et qu'un doute subsiste sur le fait de savoir s'ils sont disposés en avant ou en arrière du plan de référence P_{ref}, le sous-module de calcul MTI2 de la **figure 1** transmet, au cours de l'étape EV'4 représentée à la **figure 3****,** les deux distances réelles d1 et d2 au module de comparaison MC représenté à la **figure 1****.**

Au cours d'une étape EV'5 représentée **figure 5****,** le module de comparaison MC effectue alors l'un des calculs ci-dessous, de façon à discriminer le plus précisément possible l'objet 01 de l'objet 02, par rapport au plan de référence P_{ref}:
- si d1>0 et d2>0 alors d(1->2)= |d1-d2|=abs(d1-d2)
- si d1<0 et d2>0 alors d(1->2)= |d1|+ |d2|=abs(d1)+abs(d2)
- si d1l>0 et d2<0 alors d(1->2)= |d1|+ |d2|=abs(d1)+abs(d2)
- si d1<0 et d2<0 alors d(1->2)= ||d1|-1|d2|| =abs(abs(d1)-abs(d2))

Dans l'exemple représenté sur la **figure 4****,** le module de comparaison MC effectue le calcul suivant d(1->2)=|d1|+ |d2|=abs(d1)+abs(d2), puisque d1<0 et d2>0.

Il est ainsi déterminé avec certitude que l'individu 01 et l'arbre 02 sont bien respectivement en arrière et en avant du plan de référence Pref.

Selon une application particulière, l'individu 01 communique par exemple de manière interactive avec un interlocuteur distant (non représenté) au cours d'une visioconférence et souhaite transmettre à l'interlocuteur seulement une partie de l'image affichée sur l'écran EC à la **figure 6****,** de façon à ce que l'interlocuteur distant ne distingue sur l'image transmise que l'individu 01, et non pas l'arbre 02 qui masque partiellement l'individu 01.

Dans ce cas, au cours d'une étape EV'6 représentée à la **figure 5****,** les données de l'image représentée à la **figure 6** sont transmises au module de segmentation d'image SGI représenté sur la **figure 1****.** Au cours de cette même étape, le module de segmentation SGI sélectionne, selon une méthode connue en tant que telle, les groupes de pixels qui sont associés uniquement à l'individu 01.

Au cours d'une étape suivante EV'7 représentée à la **figure 5****,** un module de fusion d'images (non représenté) du dispositif de traitement DT affiche sur l'écran EC seulement les pixels sélectionnés associés à l'individu 01 pour former une image segmentée IMS, représentée à la **figure 7****,** la partie résiduelle de l'image réelle étant par exemple affichée sous la forme d'un fond monochrome, par exemple noir, représenté par des hachures sur la **figure 7****.**

Au cours d'une étape suivante EV'8 représentée à la **figure 5****,** le module de fusion d'images capturées modifie l'image segmentée IMS en insérant en arrière-plan de celle-ci une image de fond fixe ou animée sélectionnée au préalable, par exemple par l'individu 01 ou un utilisateur du système, afin que l'individu 01 apparaisse par exemple dans un décor virtuel.

Le module de segmentation d'image SGI transmet alors l'image segmentée modifiée à un terminal de l'interlocuteur avec lequel l'individu 01 communique via une visioconférence.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention définie par les revendications.

## Revendications

1. Procédé de traitement d'images représentatives d'une zone d'observation (ZO) dans laquelle est situé un objet (01) disposé par rapport à un plan de référence P_{ref} situé à une distance constante d_{ref} de premier et second dispositifs de capture d'image (CC) et (CP), le premier dispositif de capture étant apte à capturer un faisceau conique et le deuxième dispositif étant apte à capturer un faisceau parallèle, l'objet (01) étant quant à lui situé à une distance variable du plan de référence (P_{ref}), ledit plan de référence étant situé à l'intersection du faisceau conique et du faisceau parallèle, ledit procédé comprenant les étapes suivantes :
- réception de deux images qui ont été capturées préalablement au moyen des premier (CC) et second (CP) dispositifs de capture d'image, respectivement,
- affichage (EV2;EV'2) des images reçues (IR1, IR2) dans deux fenêtres respectives juxtaposées sur l'écran (EC), la première fenêtre comprenant un plan objet, contenant ledit objet, et la deuxième fenêtre comprenant le plan de référence,
- détermination (EV3; EV'3), dans les images affichées, du nombre de pixels séparant deux côtés contigus et parallèles, respectivement du plan objet et du plan de référence, et s'étendant le long d'une direction déterminée (X ou Y),
- corrélation (EV4; EV'4) du nombre de pixels déterminé à la valeur de la mesure de la distance réelle (d) qui sépare ledit objet dudit plan de référence, la corrélation étant basée sur une correspondance entre une distance séparant l'objet et le plan de référence et un nombre de pixels de décalage entre deux côtés contigus pour cette distance.

2. Procédé de traitement selon la revendication 1, comprenant, à la suite de ladite étape de corrélation, une étape de calcul (EV5) de la distance dudit objet par rapport aux premier et second dispositifs de capture d'image.

3. Procédé de traitement selon la revendication 1 ou la revendication 2, comprenant, dans le cas où un son est émis par ledit objet ou au voisinage de ce dernier, les étapes suivantes:
- calcul (ES3) de la distance réelle (d) qui sépare l'objet dudit plan de référence, à partir de l'intensité dudit son mesuré,
- comparaison (ES4) de ladite distance réelle (d) calculée avec la distance réelle obtenue au cours de l'étape de corrélation (EV4).

4. Procédé de traitement selon la revendication 1, comprenant à la suite de l'étape de corrélation (EV'4), dans le cas où au moins un autre objet (02) est situé dans la zone d'observation (ZO), une étape de comparaison (EV'5) des distances réelles (d1, d2) qui séparent chaque objet du plan de référence.

5. Procédé de traitement selon la revendication 1, comprenant une étape de segmentation (EV'7) de ladite image reçue.

6. Dispositif de traitement d'images (IR1, IR2) représentatives d'une zone d'observation (ZO) dans laquelle est situé un objet (01) disposé par rapport à un plan de référence P_{ref} situé à une distance constante d_{ref} de premier et second dispositifs de capture d'image (CC) et (CP), le premier dispositif de capture étant apte à capturer un faisceau conique et le deuxième dispositif étant apte à capturer un faisceau parallèle, l'objet (01) étant quant à lui situé à un distance variable du plan de référence (P_{ref}), ledit plan de référence étant situé à l'intersection du faisceau conique et du faisceau parallèle capturés respectivement par lesdits premier et second dispositifs de capture d'image, comprenant :
- des moyens (ICI) pour recevoir les deux images qui ont été capturées préalablement au moyen du premier et second dispositifs de capture d'image, respectivement,
- des moyens (EC) pour afficher ladite image reçue,
- lesdits moyens d'affichage des images reçues (IR1, IR2) dans deux fenêtres respectives juxtaposées sur l'écran (EC), la première fenêtre comprenant un plan objet, contenant ledit objet, et la deuxième fenêtre comprenant le plan de référence,
- des moyens (MTI1) pour déterminer dans les images affichées, le nombre de pixels séparant deux côtés contigus et parallèles, respectivement du plan objet et du plan de référence, et s'étendant le long d'une direction déterminée (X ou Y),
- des moyens (MTI2) pour corréler le nombre de pixels déterminé à la valeur de la mesure de la distance réelle (d) qui sépare ledit objet dudit plan de référence, une corrélation étant basée sur une correspondance entre une distance séparant l'objet et le plan de référence et un nombre de pixels de décalage entre deux côtés contigus pour cette distance.

7. Dispositif de traitement selon la revendication 6, comprenant des moyens (MTI3) pour calculer la distance dudit objet par rapport aux premier et second dispositifs de capture d'image.

8. Dispositif de traitement selon la revendication 6 ou la revendication 7, comprenant en outre:
- des moyens (MTS) pour calculer, dans le cas où un son est émis par ledit objet ou au voisinage de ce dernier, la distance réelle qui sépare ledit objet du plan de référence, à partir de l'intensité du son mesuré,
- des moyens (MC) pour comparer ladite distance calculée avec la distance obtenue par les moyens de corrélation (MTI2).

9. Dispositif de traitement selon la revendication 6, comprenant des moyens de comparaison (MC) pour comparer la distance réelle (d1) qui sépare l'objet (01) du plan de référence (P_{ref}) avec la distance réelle (d2) qui sépare un autre objet (02) du plan de référence, dans la zone d'observation (ZO).

10. Dispositif de traitement selon la revendication 6, comprenant des moyens (SGI) de segmentation de ladite image reçue.

11. Système de mesure d'une distance réelle (d) entre au moins un objet (01) et un plan de référence (P_{réf}), comprenant des premier (CC) et second (CP) dispositifs de capture d'image pour capturer une zone d'observation (ZO) dans laquelle est situé ledit objet par rapport au plan de référence P_{ref} situé à une distance constante d_{ref} de premier et second dispositifs de capture d'image (CC) et (CP), le premier dispositif de capture étant apte à capturer un faisceau conique et le deuxième dispositif étant apte à capturer un faisceau parallèle, l'objet (01) étant quant à lui situé à un distance variable du plan de référence (P_{ref}), ledit plan de référence étant situé à l'intersection du faisceau conique et du faisceau parallèle capturés respectivement par lesdits premier et second dispositifs de capture d'image, ledit système comprenant en outre :
- des moyens pour déterminer ledit plan de référence,
- un dispositif (DT) de traitement de données comprenant :
. des moyens (IC1) pour recevoir deux images (IR1, IR2) qui ont été capturées préalablement au moyen du premier et second dispositifs de capture d'image, respectivement,
. des moyens (EC) d'affichage des deux images reçues (IR1, IR2) dans deux fenêtres respectives juxtaposées sur l'écran (EC), la première fenêtre comprenant un plan objet, contenant ledit objet, et la deuxième fenêtre comprenant le plan de référence,
. des moyens (MTI1) pour déterminer dans les images affichées, le nombre de pixels séparant deux côtés contigus et parallèles, respectivement du plan objet et du plan de référence, et s'étendant le long d'une direction déterminée (X ou Y),
. des moyens (MTI2) pour corréler le nombre de pixels déterminé à la valeur de la mesure de la distance réelle (d) qui sépare ledit objet dudit plan de référence, la corrélation étant basée sur une correspondance entre une distance séparant l'objet et le plan de référence et un nombre de pixels de décalage entre deux côtés contigus pour cette distance.

12. Système selon la revendication 11, comprenant en outre un dispositif de mesure acoustique (DA) qui est destiné à mesurer l'intensité (Is) d'un son émis par ledit objet (01) ou au voisinage de ce dernier, ledit dispositif de traitement de données comprenant en outre:
- des moyens (IC2) pour recevoir la valeur de l'Intensité mesurée en provenance du dispositif de mesure acoustique,
- des moyens (MTS) pour calculer la distance réelle qui sépare l'objet du plan de référence, à partir de l'intensité du son mesuré,
- des moyens (MC) pour comparer la distance calculée avec la distance obtenue par les moyens de corrélation (MTI2).

13. Programme d'ordinateur comportant des instructions pour mettre en oeuvre le procédé de traitement de données selon l'une quelconque des revendications 1 à 5, lorsqu'il est exécuté par un dispositif de traitement des images représentatives d'une zone d'observation (ZO) dans laquelle est situé un objet disposé par rapport à un plan de référence, comprenant des moyens pour recevoir les deux images qui ont été capturées préalablement au moyen de premier et second dispositifs de capture d'image, et des moyens pour afficher les images reçues.

14. Support d'enregistrement lisible par un ordinateur sur lequel est enregistré un programme d'ordinateur comportant des instructions pour mettre en oeuvre le procédé de traitement de données selon l'une quelconque des revendications 1 à 5, lorsque ledit programme est exécuté par un dispositif de traitement des images représentatives d'une zone d'observation (ZO) dans laquelle est situé un objet disposé par rapport à un plan de référence, comprenant des moyens pour recevoir les deux images qui ont été capturées préalablement au moyen de premier et second dispositifs de capture d'image, et des moyens pour afficher les images reçues.

## Patentansprüche

1. Verfahren zum Verarbeiten von Bildern, die für einen Beobachtungsbereich (ZO) repräsentativ sind, in dem ein Objekt (O1) gelegen ist, das relativ zu einer Bezugsebene P_{ref} angeordnet ist, die in einer konstanten Entfernung d_{ref} von einer ersten und zweiten Bildaufnahmevorrichtung (CC) und (CP) gelegen ist, wobei die erste Aufnahmevorrichtung geeignet ist, einen kegelförmigen Strahl einzufangen und die zweite Vorrichtung geeignet ist, einen parallelen Strahl einzufangen, wobei das Objekt (O1) selbst in einer variablen Entfernung von der Bezugsebene (P_{ref}) gelegen ist, wobei die Bezugsebene am Schnittpunkt des kegelförmigen Strahls und des parallelen Strahls gelegen ist, wobei das Verfahren die folgenden Schritte aufweist:
- Empfangen von zwei Bildern, die zuvor jeweils mittels der ersten (CC) und zweiten (CP) Bildaufnahmevorrichtung aufgenommen worden sind,
- Anzeigen (EV2; EV'2) der empfangenen Bilder (IR1, IR2) in zwei jeweiligen Fenstern, die auf dem Bildschirm (EC) nebeneinander angeordnet sind, wobei das erste Fenster eine Objektebene aufweist, die das Objekt enthält, und das zweite Fenster die Bezugsebene aufweist,
- Bestimmen (EV3; EV'3) in den angezeigten Bildern der Anzahl von Pixeln, die zwei angrenzende und parallele Seiten jeweils der Objektebene und der Bezugsebene trennen und sich entlang einer bestimmten Richtung (X oder Y) erstrecken,
- Verbinden (EV4; EV'4) der bestimmten Anzahl von Pixeln mit dem Wert der Messung der tatsächlichen Entfernung (d), die das Objekt von der Bezugsebene trennt, wobei das Verbinden auf einer Übereinstimmung zwischen einer Entfernung, die das Objekt und die Bezugsebene trennt, und einer Anzahl von Pixeln der Verschiebung zwischen zwei angrenzenden Seiten für diese Entfernung basiert.

2. Verfahren zum Verarbeiten nach Anspruch 1, das nach dem Schritt des Verbindens einen Schritt des Berechnens (EV5) der Entfernung des Objekts von der ersten und zweiten Bildaufnahmevorrichtung aufweist.

3. Verfahren nach Anspruch 1 oder Anspruch 2, das, wenn ein Ton von dem Objekt oder in der Nähe von diesem Letzteren gesendet wird, die folgenden Schritte aufweist:
- Berechnen (ES3) der tatsächlichen Entfernung (d), die das Objekt von der Bezugsebene trennt, ausgehend von der Intensität des gemessenen Tons,
- Vergleichen (ES4) der berechneten tatsächlichen Entfernung (d) mit der tatsächlichen Entfernung, die während des Schrittes des Verbindens (EV4) erhalten wird.

4. Verfahren zum Verarbeiten nach Anspruch 1, das nach dem Schritt des Verbindens (EV'4), wenn mindestens ein anderes Objekt (02) in dem Beobachtungsbereich (ZO) gelegen ist, einen Schritt des Vergleichens (EV'5) der tatsächlichen Entfernungen (d1, d2) aufweist, die jedes Objekt der Bezugsebene trennen.

5. Verfahren zum Verarbeiten nach Anspruch 1, das einen Schritt des Segmentierens (EV'7) des empfangenen Bildes aufweist.

6. Vorrichtung zum Verarbeiten von Bildern (IR1, IR2), die für einen Beobachtungsbereich (ZO) repräsentativ sind, in dem ein Objekt (O1) gelegen ist, das relativ zu einer Bezugsebene P_{ref} angeordnet ist, die in einer konstanten Entfernung d_{ref} von einer ersten und zweiten Bildaufnahmevorrichtung (CC) und (CP) gelegen ist, wobei die erste Aufnahmevorrichtung geeignet ist, einen kegelförmigen Strahl einzufangen und die zweite Vorrichtung geeignet ist, einen parallelen Strahl einzufangen, wobei das Objekt (O1) selbst in einer variablen Entfernung von der Bezugsebene (P_{ref}) gelegen ist, wobei die Bezugsebene am Schnittpunkt des kegelförmigen Strahls und des parallelen Strahls gelegen ist, die jeweils von der ersten und zweiten Bildaufnahmevorrichtung eingefangen werden, umfassend:
- Mittel (IC1) zum Empfangen von den zwei Bildern, die zuvor jeweils mittels der ersten und zweiten Bildaufnahmevorrichtung aufgenommen worden sind,
- Mittel (EC) zum Anzeigen des empfangenen Bildes,
- die Mittel zum Anzeigen der empfangenen Bilder (IR1, IR2) in zwei jeweiligen Fenstern, die auf dem Bildschirm (EC) nebeneinander angeordnet sind, wobei das erste Fenster eine Objektebene aufweist, die das Objekt enthält, und das zweite Fenster die Bezugsebene aufweist,
- Mittel (MTI1) zum Bestimmen in den angezeigten Bildern der Anzahl von Pixeln, die zwei angrenzende und parallele Seiten jeweils der Objektebene und der Bezugsebene trennen und sich entlang einer bestimmten Richtung (X oder Y) erstrecken,
- Mittel (MTI2) zum Verbinden der bestimmten Anzahl von Pixeln mit dem Wert der Messung der tatsächlichen Entfernung (d), die das Objekt von der Bezugsebene trennt, wobei ein Verbinden auf einer Übereinstimmung zwischen einer Entfernung, die das Objekt und die Bezugsebene trennt, und einer Anzahl von Pixeln der Verschiebung zwischen zwei angrenzenden Seiten für diese Entfernung basiert.

7. Vorrichtung zum Verarbeiten nach Anspruch 6, umfassend Mittel (MTI3) zum Berechnen der Entfernung des Objekts von der ersten und zweiten Bildaufnahmevorrichtung.

8. Vorrichtung zum Verarbeiten nach Anspruch 6 oder Anspruch 7, ferner umfassend:
- Mittel (MTS) zum Berechnen, wenn ein Ton von dem Objekt oder in der Nähe von diesem Letzteren gesendet wird, der tatsächlichen Entfernung, die das Objekt von der Bezugsebene trennt, ausgehend von der Intensität des gemessenen Tons,
- Mittel (MC) zum Vergleichen der berechneten Entfernung mit der Entfernung, die von den Mitteln zum Verbinden (MTI2) erhalten worden ist.

9. Vorrichtung zum Verarbeiten nach Anspruch 6, umfassend Mittel zum Vergleichen (MC), um die tatsächliche Entfernung (d1), die das Objekt (O1) von der Bezugsebene (P_{ref}) trennt, mit der tatsächlichen Entfernung (d2), die ein anderes Objekt (02) von der Bezugsebene trennt, in dem Beobachtungsbereich (ZO) zu vergleichen.

10. Vorrichtung zum Verarbeiten nach Anspruch 6, umfassend Mittel (SGI) zum Segmentieren des empfangenen Bildes.

11. System zum Messen einer tatsächlichen Entfernung (d) zwischen mindestens einem Objekt (O1) und einer Bezugsebene (P_{ref}), umfassend eine erste (CC) und zweite (CP) Bildaufnahmevorrichtung, um einen Beobachtungsbereich (ZO) aufzunehmen, in dem das Objekt relativ zu der Bezugsebene P_{ref} gelegen ist, die in einer konstanten Entfernung d_{ref} von einer ersten und zweiten Bildaufnahmevorrichtung (CC) und (CP) gelegen ist, wobei die erste Aufnahmevorrichtung geeignet ist, einen kegelförmigen Strahl einzufangen und die zweite Vorrichtung geeignet ist, einen parallelen Strahl einzufangen, wobei das Objekt (O1) selbst in einer variablen Entfernung von der Bezugsebene (P_{ref}) gelegen ist, wobei die Bezugsebene am Schnittpunkt des kegelförmigen Strahls und des parallelen Strahls gelegen ist, die jeweils von der ersten und zweiten Bildaufnahmevorrichtung eingefangen werden, wobei das System ferner Folgendes aufweist:
- Mittel zum Bestimmen der Bezugsebene,
- eine Vorrichtung (DT) zur Datenverarbeitung, umfassend:
. Mittel (IC1) zum Empfangen von zwei Bildern (IR1, IR2), die zuvor jeweils mittels der ersten und zweiten Bildaufnahmevorrichtung aufgenommen worden sind,
. Mittel (EC) zum Anzeigen der zwei empfangenen Bilder (IR1, IR2) in zwei jeweiligen Fenstern, die auf dem Bildschirm (EC) nebeneinander angeordnet sind, wobei das erste Fenster eine Objektebene aufweist, die das Objekt enthält, und das zweite Fenster die Bezugsebene aufweist,
. Mittel (MTI1) zum Bestimmen in den angezeigten Bildern der Anzahl von Pixeln, die zwei angrenzende und parallele Seiten jeweils der Objektebene und der Bezugsebene trennen und sich entlang einer bestimmten Richtung (X oder Y) erstrecken,
. Mittel (MTI2) zum Verbinden der bestimmten Anzahl von Pixeln mit dem Wert der Messung der tatsächlichen Entfernung (d), die das Objekt von der Bezugsebene trennt, wobei das Verbinden auf einer Übereinstimmung zwischen einer Entfernung, die das Objekt und die Bezugsebene trennt, und einer Anzahl von Pixeln der Verschiebung zwischen zwei angrenzenden Seiten für diese Entfernung basiert.

12. System nach Anspruch 11, ferner umfassend eine Vorrichtung zur akustischen Messung (DA), die dazu bestimmt ist, die Intensität (Is) eines Tons, der von dem Objekt (O1) oder in der Nähe von diesem Letzteren gesendet wird, zu messen, wobei die Vorrichtung zur Datenverarbeitung ferner Folgendes aufweist:
- Mittel (IC2) zum Empfangen des Wertes der gemessenen Intensität von der Vorrichtung zur akustischen Messung,
- Mittel (MTS) zum Berechnen der tatsächlichen Entfernung, die das Objekt von der Bezugsebene trennt, ausgehend von der Intensität des gemessenen Tons,
- Mittel (MC) zum Vergleichen der berechneten Entfernung mit der Entfernung, die von den Mitteln zum Verbinden (MTI2) erhalten worden ist.

13. Computerprogramm, das Anweisungen zum Umsetzen des Verfahrens zur Datenverarbeitung nach einem der Ansprüche 1 bis 5 aufweist, wenn es von einer Vorrichtung zum Verarbeiten von Bildern, die für einen Beobachtungsbereich (ZO) repräsentativ sind, in dem ein Objekt gelegen ist, das relativ zu einer Bezugsebene angeordnet ist, ausgeführt wird, umfassend Mittel zum Empfangen der zwei Bilder, die zuvor mittels der ersten und zweiten Bildaufnahmevorrichtung aufgenommen worden sind, und Mittel zum Anzeigen der empfangenen Bilder.

14. Computerlesbares Aufzeichnungsmedium, auf dem ein Computerprogramm gespeichert ist, das Anweisungen zum Umsetzen des Verfahrens zur Datenverarbeitung nach einem der Ansprüche 1 bis 5 aufweist, wenn das Programm von einer Vorrichtung zum Verarbeiten von Bildern, die für einen Beobachtungsbereich (ZO) repräsentativ sind, in dem ein Objekt gelegen ist, das relativ zu einer Bezugsebene angeordnet ist, ausgeführt wird, umfassend Mittel zum Empfangen der zwei Bilder, die zuvor mittels einer ersten und zweiten Bildaufnahmevorrichtung aufgenommen worden sind, und Mittel zum Anzeigen der empfangenen Bilder.

## Claims

1. Method for processing images representative of an observation zone (ZO) in which is situated an object (01) disposed with respect to a reference plane P_{ref} situated at a constant distance d_{ref} from first and second image capture devices (CC) and (CP), the first capture device being able to capture a conical beam and the second device being able to capture a parallel beam, the object (01) being for its part situated at a variable distance from the reference plane (P_{ref}), said reference plane being situated at the intersection of the conical beam and of the parallel beam, said method comprising the following steps:
- reception of two images which were captured previously by means of the first (CC) and second (CP) image capture devices, respectively,
- display (EV2;EV'2) of the images received (IR1, IR2), in two respective windows juxtaposed on the screen (EC), the first window comprising an object plane, containing said object, and the second window comprising the reference plane,
- determination (EV3; EV'3), in the displayed images, of the number of pixels separating two contiguous and parallel sides, respectively of the object plane and of the reference plane, and extending along a determined direction (X or Y),
- correlation (EV4; EV'4) of the determined number of pixels with the value of the measurement of the real distance (d) which separates said object from said reference plane, the correlation being based on a correspondence between a distance separating the object and the reference plane and a number of pixels of offset between two contiguous sides for this distance.

2. Processing method according to Claim 1, comprising, subsequent to said correlation step, a step (EV5) of calculating the distance of said object with respect to the first and second image capture devices.

3. Processing method according to Claim 1 or Claim 2, comprising, in the case where a sound is emitted by said object or in the vicinity of the latter, the following steps:
- calculation (ES3) of the real distance (d) which separates the object from said reference plane, on the basis of the intensity of said measured sound,
- comparison (ES4) of said calculated real distance (d) with the real distance obtained in the course of the correlation step (EV4).

4. Processing method according to Claim 1, comprising subsequent to the correlation step (EV'4), in the case where at least one other object (02) is situated in the observation zone (ZO), a step (EV'5) of comparing the real distances (d1, d2) which separate each object from the reference plane.

5. Processing method according to Claim 1, comprising a step (EV'7) of segmenting said image received.

6. Device for processing images (IR1, IR2) representative of an observation zone (ZO) in which is situated an object (01) disposed with respect to a reference plane P_{ref} situated at a constant distance d_{ref} from first and second image capture devices (CC) and (CP), the first capture device being able to capture a conical beam and the second device being able to capture a parallel beam, the object (01) being for its part situated at a variable distance from the reference plane (P_{ref}), said reference plane being situated at the intersection of the conical beam and of the parallel beam captured respectively by said first and second image capture devices, comprising:
- means (IC1) for receiving the two images which were captured previously by means of the first and second image capture devices, respectively,
- means (EC) for displaying said image received,
- said means of display of the images received (IR1, IR2) in two respective windows juxtaposed on the screen (EC), the first window comprising an object plane, containing said object, and the second window comprising the reference plane,
- means (MTI1) for determining in the displayed images the number of pixels separating two contiguous and parallel sides, respectively of the object plane and of the reference plane, and extending along a determined direction (X or Y),
- means (MTI2) for correlating the determined number of pixels with the value of the measurement of the real distance (d) which separates said object from said reference plane, a correlation being based on a correspondence between a distance separating the object and the reference plane and a number of pixels of offset between two contiguous sides for this distance.

7. Processing device according to Claim 6, comprising means (MTI3) for calculating the distance of said object with respect to the first and second image capture devices.

8. Processing device according to Claim 6 or Claim 7, furthermore comprising:
- means (MTS) for calculating, in the case where a sound is emitted by said object or in the vicinity of the latter, the real distance which separates said object from the reference plane, on the basis of the intensity of the measured sound,
- means (MC) for comparing said calculated distance with the distance obtained by the correlation means (MTI2).

9. Processing device according to Claim 6, comprising comparison means (MC) for comparing the real distance (d1) which separates the object (01) from the reference plane (P_{ref}) with the real distance (d2) which separates another object (02) from the reference plane, in the observation zone (ZO).

10. Processing device according to Claim 6, comprising means (SGI) for segmenting said image received.

11. System for measuring a real distance (d) between at least one object (01) and a reference plane (P_{ref}), comprising first (CC) and second (CP) image capture devices for capturing an observation zone (ZO) in which said object is situated with respect to the reference plane P_{ref} situated at a constant distance d_{ref} from first and second image capture devices (CC) and (CP), the first capture device being able to capture a conical beam and the second device being able to capture a parallel beam, the object (01) being for its part situated at a variable distance from the reference plane (P_{ref}), said reference plane being situated at the intersection of the conical beam and of the parallel beam captured respectively by said first and second image capture devices, said system furthermore comprising:
- means for determining said reference plane,
- a device (DT) for processing data comprising:
. means (IC1) for receiving two images (IR1, IR2) which were captured previously by means of the first and second image capture devices, respectively,
. means (EC) for displaying the two images received (IR1, IR2) in two respective windows juxtaposed on the screen (EC), the first window comprising an object plane, containing said object, and the second window comprising the reference plane,
. means (MTI1) for determining in the displayed images the number of pixels separating two contiguous and parallel sides, respectively of the object plane and of the reference plane, and extending along a determined direction (X or Y),
. means (MTI2) for correlating the determined number of pixels with the value of the measurement of the real distance (d) which separates said object from said reference plane, the correlation being based on a correspondence between a distance separating the object and the reference plane and a number of pixels of offset between two contiguous sides for this distance.

12. System according to Claim 11, furthermore comprising an acoustic measurement device (DA) which is intended to measure the intensity (Is) of a sound emitted by said object (01) or in the vicinity of the latter, said device for processing data furthermore comprising:
- means (IC2) for receiving the value of the measured intensity originating from the acoustic measurement device,
- means (MTS) for calculating the real distance which separates the object from the reference plane, on the basis of the intensity of the measured sound,
- means (MC) for comparing the calculated distance with the distance obtained by the correlation means (MTI2).

13. Computer program comprising instructions for implementing the method for processing data according to any one of Claims 1 to 5, when it is executed by a device for processing images representative of an observation zone (ZO) in which is situated an object disposed with respect to a reference plane, comprising means for receiving the two images which were captured previously by means of first and second image capture devices, and means for displaying the images received.

14. Recording medium readable by a computer on which is recorded a computer program comprising instructions for implementing the method for processing data according to any one of Claims 1 to 5, when said program is executed by a device for processing images representative of an observation zone (ZO) in which is situated an object disposed with respect to a reference plane, comprising means for receiving the two images which were captured previously by means of first and second image capture devices, and means for displaying the images received.
